(19) **Europäisches Patentamt / European Patent Office / Office européen des brevets**

(11) **EP 2 232 218 B1**

(12) **FASCICULE DE BREVET EUROPEEN**

(45) Date de publication et mention
de la délivrance du brevet:
**04.05.2011 Bulletin 2011/18**

(21) Numéro de dépôt: **08867395.9**

(22) Date de dépôt: **18.12.2008**

(51) Int Cl.:
***G01L 9/00*** (2006.01)

(86) Numéro de dépôt international:
**PCT/EP2008/067944**

(87) Numéro de publication internationale:
**WO 2009/083484 (09.07.2009 Gazette 2009/28)**

(54) **CAPTEUR PASSIF A ONDES DE SURFACES COMPORTANT UNE ANTENNE INTEGREE ET APPLICATIONS MEDICALES UTILISANT CE TYPE DE CAPTEUR PASSIF**

OBERFLÄCHENWELLEN-PASSIVSENSOR MIT EINER INTEGRIERTEN ANTENNE UND MEDIZINTECHNISCHE GERÄTE, DIE DIESE ART VON PASSIVSENSOR VERWENDEN

SURFACE-WAVE PASSIVE SENSOR INCLUDING AN INTEGRATED ANTENNA, AND MEDICAL APPLICATIONS USING SUCH A TYPE OF PASSIVE SENSOR

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.12.2007 FR 0760270**

(43) Date de publication de la demande:
**29.09.2010 Bulletin 2010/39**

(73) Titulaire: **Senseor**
**06560 Valbonne (FR)**

(72) Inventeurs:
• **CHOMMELOUX, Luc**
**F-06110 Le Cannet (FR)**
• **BELGACEM, Brahim**
**F-25300 Pontarlier (FR)**
• **LEGUEN, Jean-François**
**F-94117 Arcueil Cedex (FR)**
• **BALLANDRAS, Sylvain**
**F-25000 Besançon (FR)**
• **CHAMI, Ali**
**F-94117 Arcueil Cedex (FR)**
• **LETHUC, Philippe**
**F-94117 Arcueil Cedex (FR)**

• **LUXEY, Cyril**
**F-94117 Arcueil Cedex (FR)**
• **STARAJ, Robert**
**F-94117 Arcueil Cedex (FR)**

(74) Mandataire: **Esselin, Sophie et al**
**Marks & Clerk France**
**Conseils en Propriété Industrielle**
**Immeuble " Visium "**
**22, Avenue Aristide Briand**
**94117 Arcueil Cedex (FR)**

(56) Documents cités:
WO-A-00/72255          WO-A-2006/057987
DE-A1- 10 215 834      GB-A- 2 054 850
US-A1- 2006 049 714    US-A1- 2007 107 522

• REINDL L ET AL: "SAW devices as wireless passive sensors" ULTRASONICS SYMPOSIUM, 1996. PROCEEDINGS., 1996 IEEE SAN ANTONIO, TX, USA 3-6 NOV. 1996, NEW YORK, NY, USA, IEEE, US, vol. 1, 3 novembre 1996 (1996-11-03), pages 363-367, XP010217902 ISBN: 978-0-7803-3615-5

**EP 2 232 218 B1**

**Description**

L'invention concerne un nouveau type de capteur passif interrogeable à distance via une antenne couplée et avantageusement utilisable dans tout type de milieu organique présentant une permittivité diélectrique notablement supérieure à celle du vide comme divulgué par exemple dans WO 00/72255 A1 ou bien dans US 2006/0049714 A1. Typiquement sont concernés les milieux biologiques pour lesquels il est particulièrement intéressant de disposer de capteurs permettant d'effectuer des mesures invasives et l'analyse des tissus du corps humain ou d'effectuer des mesures de pression artérielle, ...

Typiquement la forte permittivité diélectrique des milieux biologiques (de l'ordre de 53 pour le muscle à 2.45 GHz) permet de concevoir des capteurs passifs notamment à ondes de surface fonctionnant à des longueurs d'onde électromagnétique réduites et autorisant par la même des dimensions d'antennes également réduites.

Actuellement il a déjà été proposé d'utiliser des capteurs passifs à ondes de surface de type « surface acoustic waves » désigné par l'acronyme SAW, pour ce type d'application. Le principe de ce type de capteur est décrit ci-après. Il peut selon l'art connu s'agir notamment de capteur de température et/ou de pression.

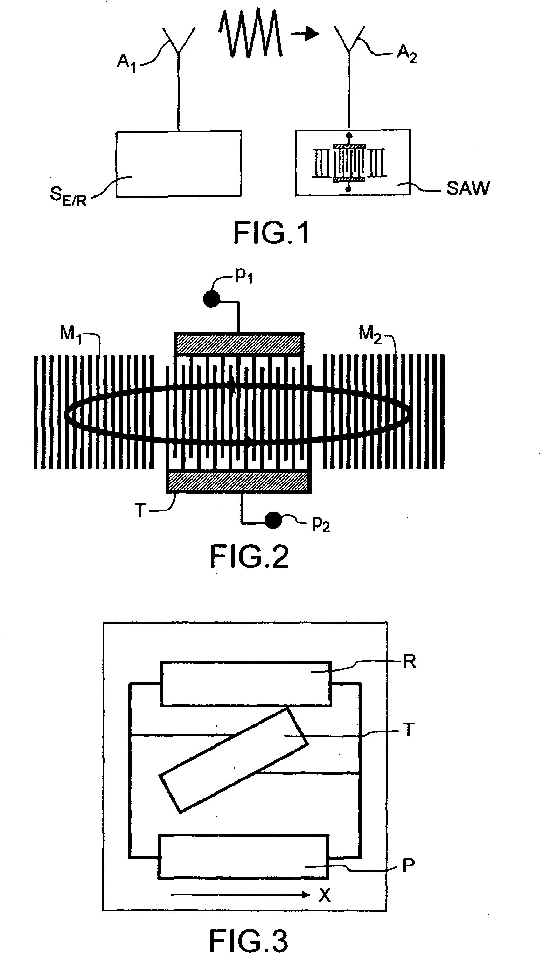

De manière générale, un système complet se compose d'une unité d'interrogation (constituée elle-même d'une partie émetteur et d'une partie récepteur i .e . E/R) $S_{E/R}$ et d'un capteur de température et/ou de pression à ondes acoustiques de surface SAW, comme illustré en figure 1. Le dispositif SAW est de type résonateur ce qui permet d'accéder à des structures de tailles réduites. Le système d'interrogation ainsi que le capteur SAW sont munis respectivement d'antennes $A_1$ et $A_2$, adaptées à la bande de fréquence de travail (bandes ISM 433 MHz, 868 MHz, 2.45 GHz,...) ou à toute autre bande de fréquence libre d'utilisation, ce qui permet d'effectuer une interrogation sans fil du capteur. Le mode d'interrogation est le suivant :

L'émetteur du système d'interrogation envoie un signal d'interrogation (impulsion temporelle d'une porteuse dans la bande ISM, plage temporelle d'émission) vers l'antenne associée au résonateur SAW. Par effet de couplage piézoélectrique, l'onde électromagnétique incidente est transformée en une onde acoustique se propageant à la surface du substrat.

Si le signal d'émission présente une fréquence de résonance suffisamment proche de la fréquence propre du résonateur SAW, ce dernier entre en résonance en passant par une période de charge. Il s'établit alors un régime permanent d'oscillations à la fréquence de résonance propre du dispositif SAW. Cette fréquence de résonance est proportionnelle à la vitesse de l'onde de surface dans la cavité résonante qui dépend elle-même de la température et des contraintes vues par le résonateur.

Le capteur utilisé est fondé sur une structure de type résonateur comme illustré en figure 2. Le résonateur est composé d'un transducteur à peignes interdigités (transducteur au centre de la structure). Le transducteur est constitué d'une alternance d'électrodes, qui se répètent avec une certaine périodicité, appelée période de métallisation, déposées sur un substrat piézoélectrique (pouvant typiquement être en quartz). Les électrodes avantageusement en aluminium (pouvant être réalisées par photolithographie) ont une faible épaisseur pouvant aller de quelques centaines d'angstrôms typiquement jusqu'au micron, sans que cela soit restrictif.

Le transducteur comporte en outre deux ports $p_1$ et $p_2$ comme illustré en figure 2, pouvant être reliés à une antenne ou à ses brins rayonnants. Les lignes de champ ainsi créées entre deux électrodes de polarité différentes donnent naissance (grâce au caractère linéaire de l'effet piézoélectrique) à une onde acoustique de surface dans la zone de recouvrement des électrodes pour une excitation électrique à la fréquence de résonance du dispositif (donnée en première approximation par la vitesse de phase de l'onde de surface sous le réseau d'électrodes divisée par la période électrique du transducteur).

Le capteur transmet à l'antenne un signal à sa fréquence de résonance qui porte l'information pouvant être liée au phénomène de pression ou de température. Le signal radiofréquence résultant est rayonné et transmis au récepteur.

Le récepteur du système d'interrogation détecte durant la plage temporelle de réception tout ou partie du signal radiofréquence ré-émis (correspondant à une oscillation amortie) et en extrait les informations de pression et de température recherchées via un traitement du signal adapté permettant d'identifier la fréquence de résonance du dispositif à ondes de surface.

Le transducteur est une structure bi-directionnelle c'est à dire que la quantité d'énergie qui se propage vers la droite et vers la gauche a la même intensité. On vient disposer avantageusement de part et d'autre du transducteur des électrodes qui ont un rôle de réflecteur. Chaque réflecteur réfléchit partiellement l'énergie émise par le transducteur. Ces réflecteurs ou miroirs fonctionnent à la condition de Bragg pour laquelle la période mécanique du réseau correspond à la demi-longueur d'onde de la propagation acoustique.

Si l'on multiplie le nombre de réflecteurs on crée une réflexion totale et ainsi une cavité résonante qui est caractérisée par sa fréquence de résonance. La fréquence qui dépend de la température et des contraintes (i.e. pression) vues par le résonateur est le paramètre mesuré par le système d'interrogation. On calcule la pression et la température à partir de cette mesure.

Selon l'état de l'art, les capteurs de pression et de température sont généralement fondés sur une structure différentielle utilisant trois résonateurs SAW, comme illustré en figure 3. Du fait de la faible largeur de bande allouée pour les communications ISM, les résonateurs sont réalisés sur quartz sur des coupes pour lesquelles la dérive thermique de la fréquence est réduite. Ces trois résonateurs sont enfermés dans une cavité avec une certaine pression de référence.

Le premier résonateur R utilisant l'axe de propagation habituel X est situé dans une zone exempte de contraintes. Le résonateur T également localisé dans une zone exempte de contraintes, est incliné d'un certain angle par rapport à l'axe X. Le fait d'incliner le résonateur T confère à ce dernier une sensibilité différente de celle du résonateur R vis à vis de la température. La différence de fréquence entre les résonateurs R et T permet par conséquent d'obtenir une information uniquement liée à la température indépendante de l'état de la pression exercée sur la face inférieure du dispositif.

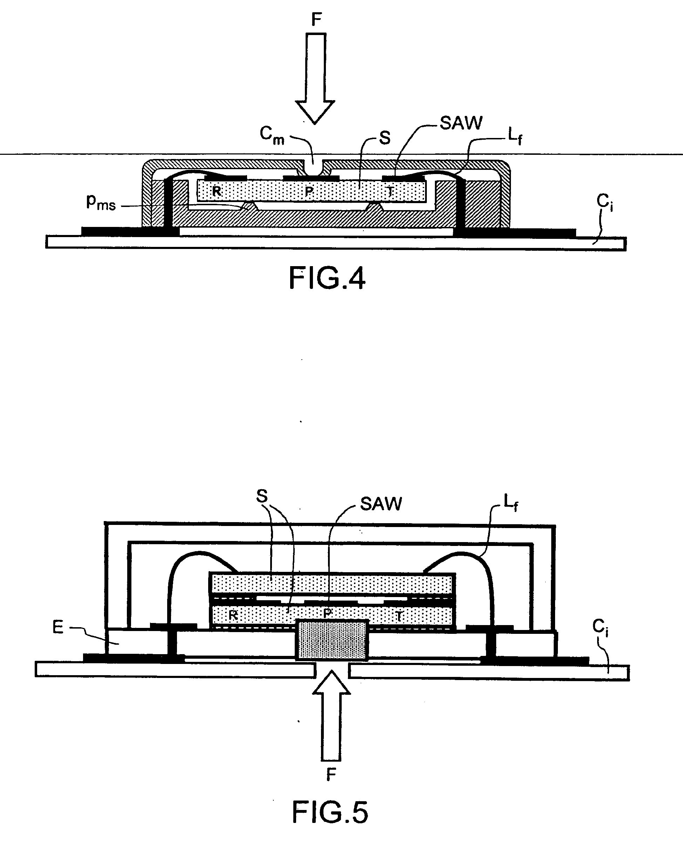

Le résonateur P utilisant l'axe de propagation X comme le résonateur R est localisé dans une zone où les contraintes sont notablement plus élevées que les résonateurs R et T de sorte que quand une surpression (par rapport à la pression de la cavité) est exercée sur le capteur, la fréquence du résonateur P varie proportionnellement. Les figures 4 et 5 présentent deux exemples de réalisation.

Plus précisément, dans le premier cas illustré en figure 4, la pression du milieu extérieur F est transmise via un capot métallique Cm embouti en contact avec une zone du substrat en quartz S. La puce est en appui sur deux parties métalliques rectilignes saillantes $p_{ms}$, de sorte que seul le résonateur P est soumis à des contraintes significatives. L'ensemble est positionné sur un circuit imprimé Ci et connecté via des liaisons filaires $L_f$. La référence SAW désigne de manière commune les trois résonateurs R, T, P.

Dans le second cas illustré en figure 5, la pression du milieu extérieur est directement appliquée sur le substrat en quartz qui a été aminci localement dans la zone où se trouve le résonateur P. Les deux autres résonateurs sont localisés dans une zone non amincie et collée sur une embase E donc moins sensible aux effets de contraintes induits par l'application de la pression hydrostatique sur l'ensemble du composant.

Dans ces deux cas, le résonateur P utilise la même direction de propagation que le résonateur R (même dépendance de la fréquence en fonction de la température). La différence de fréquence entre les résonateurs P et R permet par conséquent d'obtenir une information uniquement liée à la pression exercée indépendante de la température. L'embase E permet de positionner l'ensemble des résonateurs au niveau du circuit imprimé Ci.

Dans la plupart des applications industrielles et automobiles les capteurs de pression et de température SAW fondés sur les principes précédemment décrits donnent satisfaction en particulier sur le plan de l'encombrement.

Pour certaines applications, en particulier pour le domaine médical, la taille du capteur est un élément déterminant, en particulier pour les solutions implantables. Même si des essais prometteurs ont été effectués à basse fréquence, il est impératif de réduire davantage la taille du capteur et celle de l'antenne qui lui est associée.

C'est dans ce contexte que la présente invention propose un nouveau type de capteur passif de faible encombrement.

Plus précisément, la présente invention a pour objet un capteur passif interrogeable à distance comprenant une antenne et au moins un résonateur à ondes de surfaces comportant un transducteur à électrodes interdigitées avec deux ports à la surface d'un substrat piézoélectrique, caractérisé en ce que l'antenne est constituée par un dipôle constitué de deux brins conducteurs connectés aux deux ports du transducteur et intégrés sur ledit substrat piézoélectrique, le capteur passif comportant en outre un élément conducteur de court-circuit ou de réglage reliant les deux brins conducteurs en deux points de connexion appartenant auxdits brins.

Selon l'invention, les dimensions d'antennes pouvant être utilisées (de l'ordre de quelques centimètres) permettent de pouvoir intégrer celles-ci directement sur le substrat généralement en quartz. Les techniques originales de miniaturisation appliquées permettent alors de réduire ces dimensions jusqu'à un encombrement total de quelques millimètres. Leur fabrication est réalisée en même temps que le résonateur de type « surface acoustic waves » désigné par l'acronyme SAW, ce qui permet en particulier de simplifier notablement le procédé de fabrication du capteur.

Selon une variante de l'invention, la longueur des brins conducteurs de l'antenne est de l'ordre de $\lambda g/4 = \lambda_o/4\sqrt{\varepsilon_r} = c/(4f_o \sqrt{\varepsilon_r})$, avec $\lambda_g$ la longueur d'onde guidée dans le matériau , $\lambda_o$ étant la longueur d'onde du signal électromagnétique dans le vide associée à la fréquence de résonance du résonateur et $\varepsilon_r$ étant en première approximation la permittivité diélectrique moyenne ambiante.

Selon une variante de l'invention, les brins conducteurs des antennes sont repliés ou enroulés afin de diminuer l'encombrement total de la structure.

Avantageusement, le repliement peut consister en une structure en méandres ou de type serpentin.

Selon une variante de l'invention, le capteur passif comporte en outre un élément de court-circuit conducteur connectant les deux brins conducteurs de l'antenne en deux points de connexion.

De manière générale, le transducteur présente un axe de propagation des ondes acoustiques de surface et un axe perpendiculaire audit axe de propagation, ledit axe de propagation séparant le plan du substrat en deux premiers demi-plans, l'axe perpendiculaire séparant le plan du substrat en deux seconds demi-plans.

Selon une variante de l'invention, lesdits points de connexion sont situés dans le même premier demi-plan.

Selon une variante de l'invention, l'élément rayonnant est court-circuité par un pont conducteur, les points de connexion étant situés dans des premiers demi-plans différents.

Selon une variante de l'invention, les points de connexion sont situés dans des seconds demi-plans différents.

Selon une variante de l'invention, les points de connexion sont situés dans un même second demi-plan.

Selon une variante de l'invention, l'élément de court-circuit présente une largeur inférieure ou égale, ou supérieure à celle des brins conducteurs.

Selon une variante de l'invention, le capteur est caractérisé en ce qu'il est un capteur de pression comportant au moins deux résonateurs, chaque résonateur étant couplé à une ou plusieurs antennes intégrées.

Selon une variante de l'invention, le capteur est caractérisé en ce qu'il est un capteur de pression et de température, comportant trois résonateurs, chaque résonateur étant couplé à une ou plusieurs antennes intégrées.

Selon une variante de l'invention, le capteur passif comporte un empilement de plusieurs substrats comportant chacun un résonateur et une antenne intégrée, réalisés par l'intermédiaire de cales périphériques.

Avantageusement, les cales périphériques sont de type pâte de verre.

Selon une variante de l'invention, le résonateur sensible à la pression est en position supérieure dans l'empilement et en position tête-bêche par rapport au résonateur de référence.

L'invention a encore pour objet l'utilisation d'un capteur passif selon l'invention, caractérisée en ce que le capteur passif est introduit dans une partie d'un corps vivant, de manière à analyser ladite partie, les caractéristiques physiques de l'antenne intégrée (de type dimensions, bande d'utilisation, impédance, directivité, gain,...) étant définies de manière à pouvoir effectuer l'analyse de ladite partie du corps vivant.

Le milieu de propagation peut être alors majoritairement constitué de tissus pouvant être la peau, les poumons, les muscles, les os,....

L'invention a enfin pour objet l'utilisation d'un capteur passif selon l'invention pour mesurer la pression artérielle d'un être vivant.

L'invention sera mieux comprise et d'autres avantages apparaîtront à la lecture de la description qui va suivre donnée à titre non limitatif et grâce aux figures annexées parmi lesquelles :

- la figure 1 illustre un capteur comportant une unité d'interrogation et un résonateur de type SAW ;
- la figure 2 illustre une structure de résonateur composée d'un transducteur à peignes interdigités ;
- la figure 3 illustre un exemple de capteur de pression et de température selon l'art connu utilisant trois résonateurs SAW ;
- la figure 4 illustre un premier exemple de réalisation de capteur de température et de pression selon l'art connu ;

- la figure 5 illustre un second exemple de réalisation de capteur de température et de pression selon l'art connu ;
- la figure 6 illustre un premier exemple de capteur passif selon l'invention comportant un résonateur relié à une antenne ;
- la figure 7 illustre un second exemple de capteur passif selon l'invention comportant des brins d'antenne repliés ;
- la figure 8 illustre sur un abaque de Smith représentatif de l'adaptation de l'antenne à travers le tracé du coefficient en fonction de la fréquence ;
- la figure 9 illustre un troisième exemple de capteur passif selon l'invention comportant un petit brin conducteur secondaire jouant le rôle d'élément de court-circuit permettant le réglage de l'impédance ;
- la figure 10 illustre un abaque de Smith représentatif de l'adaptation d'impédance dans le cas du capteur passif illustré en figure 9 ;
- la figure 11 illustre un abaque de Smith représentatif de l'adaptation d'impédance dans le cas du capteur passif intégrant un élément de court-circuit de largeur plus élevée que celle des brins conducteurs de l'antenne ;
- la figure 12 illustre un quatrième exemple de capteur passif selon l'invention comportant un pont conducteur reliant les deux brins d'antenne ;
- la figure 13 illustre l'abaque de Smith représentatif de l'adaptation d'impédance dans le cas du capteur passif illustré en figure 12 ;
- la figure 14 illustre l'abaque de Smith représentatif de l'adaptation d'impédance dans le cas du capteur passif intégrant un pont conducteur de largeur inférieure à celle des brins conducteurs de l'antenne ;
- la figure 15 illustre l'abaque de Smith représentatif de l'adaptation d'impédance dans le cas du capteur passif intégrant un pont conducteur de largeur supérieure à celle des brins conducteurs de l'antenne ;
- la figure 16 illustre un cinquième exemple de capteur passif selon l'invention comportant un pont conducteur reliant les deux brins d'antenne situé dans un même demi-plan ;
- la figure 17 illustre un sixième exemple de capteur passif selon l'invention comportant deux ponts conducteurs reliant les deux brins d'antenne ;
- la figure 18 illustre un premier exemple de capteur de température et de pression selon l'invention ;
- la figure 19 illustre un second exemple de capteur de température et de pression plus compact.

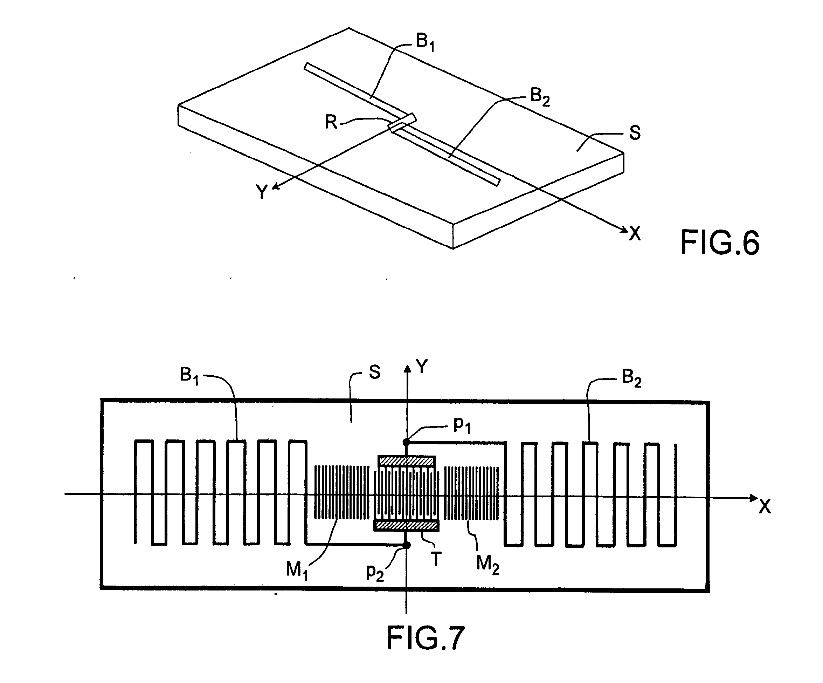

De manière générale, le capteur passif de l'invention comporte au moins un résonateur R relié à une antenne d'émission à la surface d'un substrat piézoélectrique S comme illustré en figure 6. L'antenne peut typiquement être un dipôle présentant deux brins rayonnants $B_1$ et $B_2$. Ces deux brins rayonnants sont réalisés par des métallisations conductrices déposées sur le substrat S pouvant typiquement être en quartz qui reçoit aussi le résonateur à ondes de surface R. La dimension d'un élément d'antenne est voisine de $\lambda_g/4$ ou tout multiple de cette valeur, $\lambda_g$ étant la longueur d'onde guidée dans le matériau. Cette longueur se calcule approximativement par la relation :

$$\lambda_g = \lambda_O/\sqrt{\varepsilon_r} = c/(f_O\ \sqrt{\varepsilon_r})$$

avec $\lambda_O$ la longueur d'onde du signal électromagnétique dans le vide associée à la fréquence de résonance du résonateur, $\varepsilon_r$ en première approximation la permittivité moyenne ambiante dépendant du substrat porteur et de l'environnement dans lequel est plongé l'antenne.

Selon une variante de l'invention, pour gagner en compacité il peut être avantageux de replier toutes les formes géométriques imaginables ou enrouler les brins d'antenne comme illustré en figure 7 qui montre des brins d'antenne $B_1$ et $B_2$ repliés sous forme de méandres et connectés aux ports $p_1$ et $p_2$ du transducteur T inséré entre deux réflecteurs $M_1$ et $M_2$, l'ensemble formant le résonateur à ondes de surface. Il est à noter que le repliement pourrait tout aussi bien être réalisé sous forme de serpentin.

De manière générale il est important d'assurer une bonne adaptation d'impédance entre les éléments d'antenne et le résonateur pour limiter les pertes et ce à la fréquence de fonctionnement du résonateur.

De manière générale, un abaque de Smith représente un outil de calcul graphique permettant la représentation des grandeurs complexes vues sur une ligne de transmission. Ces grandeurs sont généralement un coefficient de réflexion ou un coefficient de transmission complexe, dont l'évolution en fréquence est tracée en représentation polaire. Présenter sous forme d'abaque de Smith un coefficient de réflexion permet de connaître la valeur complexe de l'impédance correspondante en fonction de la fréquence, c'est à dire aussi bien la partie réelle $R_z$ que la partie imaginaire $X_z$ de l'impédance d'entrée de l'élément rayonnant exprimé sous la forme $Z = R_z + jX_z$, par lecture directe de ces valeurs sur l'abaque. Cet abaque permet aussi de se rendre compte de la qualité de l'adaptation de l'antenne au capteur. A la fréquence de travail considérée, le transfert de puissance antenne/capteur ou inverse, est d'autant meilleur que le lieu d'impédance est proche du centre de l'abaque.

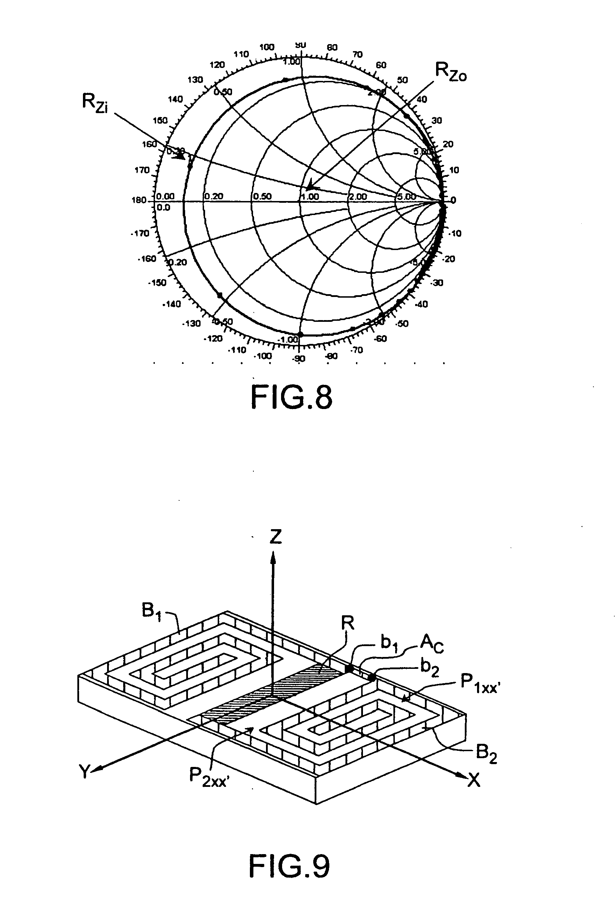

Il ressort de la figure 8 que l'adaptation d'impédance est réalisée lorsque le cercle d'impédance coupe l'axe horizontal au point d'adaptation $R_{z0}$ correspondant au point 1 sur l'axe horizontal. Avec une configuration de brins d'antenne telle que celle illustrée en figure 7 on est typiquement en mesure d'obtenir le cercle d'impédance coupant l'axe horizontal au point $R_{zi}$ de l'ordre de 0,1.

Selon une variante de l'invention, il est proposé d'introduire un élément de court-circuit ou de réglage permettant de mieux assurer l'adaptation d'impédance recherchée. La figure 9 illustre cet exemple de capteur passif comportant un petit brin conducteur secondaire jouant le rôle d'élément de court-circuit. Selon cette configuration, les brins conducteurs $B_1$ et $B_2$ sont ainsi reliés par un élément conducteur $A_c$. Plus précisément les deux brins conducteurs sont reliés en deux points $b_1$ et $b_2$ par l'élément conducteur $A_c$, appartenant à un même premier demi-plan $P_{1XX'}$ si l'on considère que l'axe de propagation des ondes acoustiques au sein du résonateur coupe le plan du substrat en deux premiers demi-plans $P_{1xx'}$ et $P_{2XX'}$.

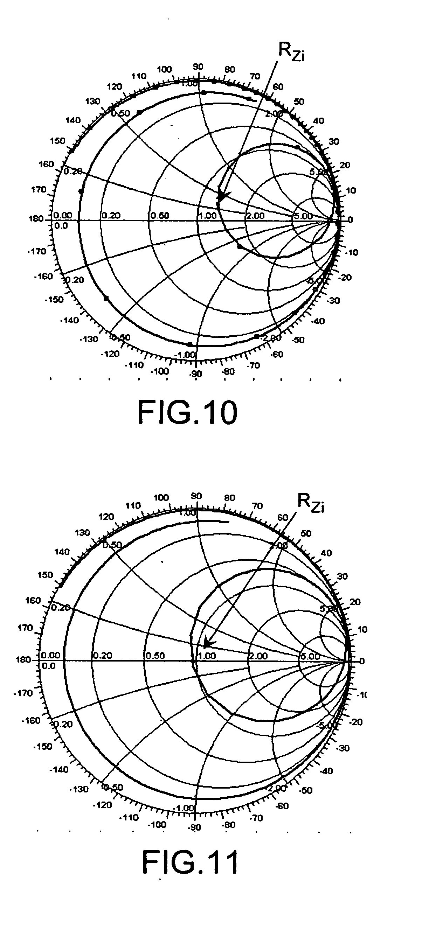

La figure 10 illustre l'abaque de Smith associé mettant en évidence qu'il est possible d'atteindre le point horizontal 1 grâce à l'introduction de cet élément de court-circuit positionné de telle façon à relier électriquement en un point particulier les deux brins rayonnants, permettant par là même, de choisir de manière précise l'impédance de l'antenne présentée au capteur.

Ce choix permet de réaliser une adaptation quasi parfaite des impédances, ce qui améliore le transfert de puissance entre capteur SAW et antenne, et de manière générale le bilan de liaison. On crée ainsi un phénomène «d'antirésonance» qui permet de diminuer la valeur de l'impédance à la fréquence considérée, ce qui amène le lieu d'impédance beaucoup plus près du centre de l'abaque montré en figure 10. L'adaptation et de ce fait le transfert de puissance s'en trouvent ainsi améliorés.

Dans la configuration précédente, l'élément de court-circuit ou de réglage présente une largeur plus faible que celle des brins conducteurs constitutifs des éléments d'antenne. Néanmoins il est également possible de jouer sur la largeur de l'élément de court-circuit pour régler de façon différente l'adaptation d'impédance et notamment en élargissant cet élément de court-circuit. On observe sur la figure 11 que le point de fonctionnement obtenu est très proche du point d'adaptation optimal.

L'élément de liaison métallique $A_c$ joue donc le rôle d'un élément d'accord particulièrement bien adapté au problème de réglage de la partie réelle de l'impédance d'entrée de la structure et permet d'adapter parfaitement un élément rayonnant à un résonateur présentant une impédance purement réelle. Néanmoins, les résonateurs SAW présentant une impédance capacitive, l'optimisation de l'adaptation de l'élément rayonnant peut aussi être opérée par le réglage de la partie imaginaire.

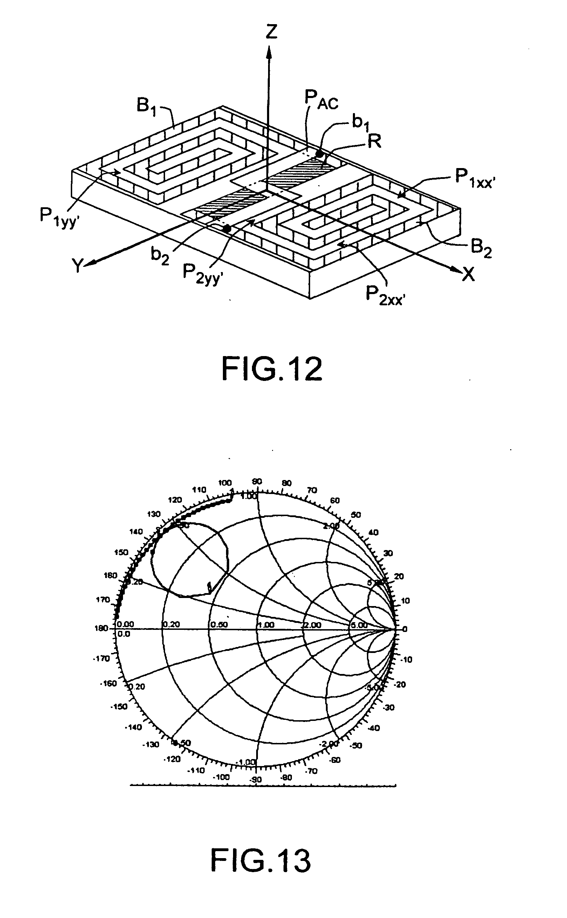

C'est pourquoi, selon une autre variante de l'invention, il est proposé de remplacer l'élément secondaire Ae par un pont métallique $P_{Ae}$ en forme de S, le pont reliant les deux brins du dipôle au niveau de la sortie du capteur SAW comme illustré en figure 12. Plus précisément les deux brins conducteurs sont reliés en deux points $b_1$ et $b_2$ appartenant dans ce cas à deux premiers plans différents $P_{1XX'}$ et $P_{2XX'}$. En considérant l'axe YY' perpendiculaire à l'axe de propagation XX', il apparaît de plus que les points $b_1$ et $b_2$ appartiennent également à deux seconds demi-plans différents : $P_{1YY'}$ et $P_{2YY'}$.

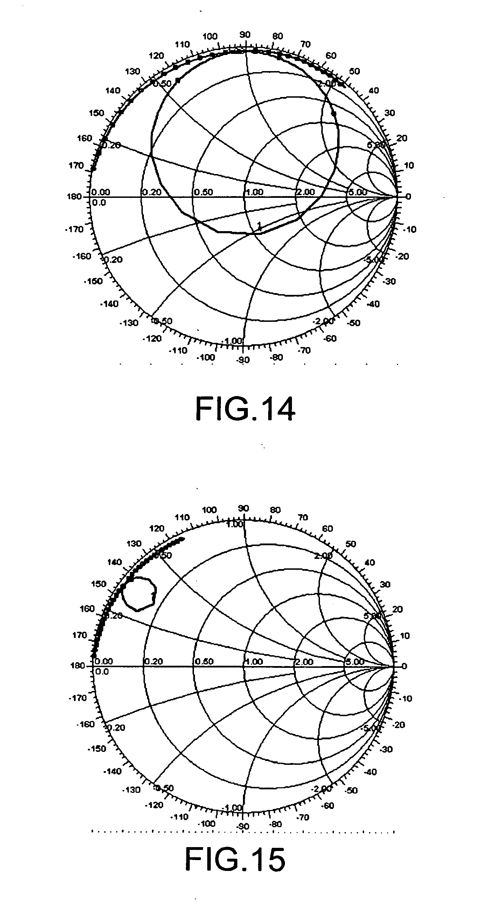

On peut observer sur la figure 13 que l'on provoque ainsi une rotation du lieu d'impédance sur l'abaque de Smith. Cette rotation traduit une modification notable de la partie imaginaire de l'impédance de l'élément. Cet élément de liaison métallique joue donc le rôle d'un élément d'accord permettant aussi le réglage du comportement en impédance du point de vue partie imaginaire. Il est également possible de jouer sur la largeur de ce pont pour régler plus finement l'adaptation d'impédance entre l'antenne et le capteur SAW. Les figures 14 et 15 illustrent respectivement les abaques de Smith obtenus avec des ponts conducteurs de largeur respectivement inférieure et supérieure à celle des brins conducteurs de l'antenne.

On observe sur la figure 14 que l'on provoque ainsi une rotation du lieu d'impédance sur l'abaque de Smith dans le sens horaire accompagnée d'une ouverture de la boucle. Cette rotation traduit une modification notable de la partie imaginaire de l'impédance de l'élément.

On observe sur la figure 15 que l'on provoque ainsi une rotation du lieu d'impédance sur l'abaque de Smith dans le sens nanti-horaire accompagnée d'une diminution de la boucle. Cette rotation traduit une modification notable de la partie imaginaire de l'impédance de l'élément.

Cet élément de liaison métallique joue donc le rôle d'un élément d'accord permettant un réglage de la partie imaginaire de l'impédance d'entrée de l'élément rayonnant qui est connecté sur le capteur.

Cependant, ce pont métallique qui relie de cette manière les deux brins de l'élément rayonnant peut nécessiter l'utilisation d'une couche intermédiaire, du fait que son tracé passe par l'endroit où est situé le résonateur SAW.

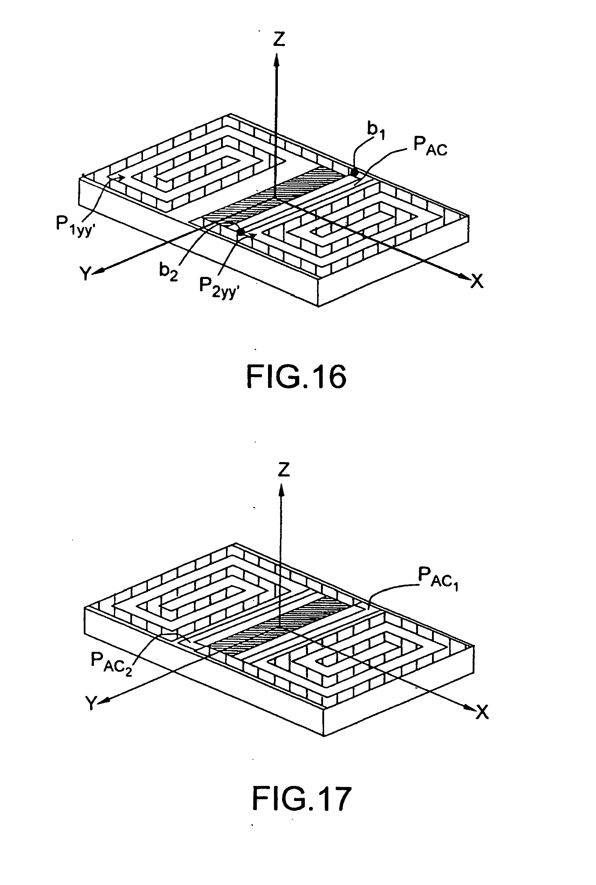

Une solution possible pour s'affranchir d'une telle contrainte peut résider dans le report de ce pont d'un seul côté du résonateur comme illustré en figure 16. Les points de connexion, la largeur et la forme de ce nouveau pont constituent les nouveaux paramètres de réglage. Selon cette configuration les points $b_1$ et $b_2$ appartiennent alors à un même second demi-plan, en l'occurrence comme représenté en figure 16 au second demi-plan $P_{2YY'}$.

Des valeurs plus faibles peuvent aussi être obtenues par la mise en parallèle de deux ponts de ce type, illustrée en figure 17 qui montre un exemple dans lequel les deux brins d'antenne sont connectés via deux ponts conducteurs $P_{Ac1}$ et $P_{Ac2}$.

De manière générale, la présente invention propose une structure originale de capteur passif associé à des éléments d'antenne miniature. La compacité de tels capteurs passifs ouvre la voie à des applications médicales et ce de manière invasive ou non-invasive.

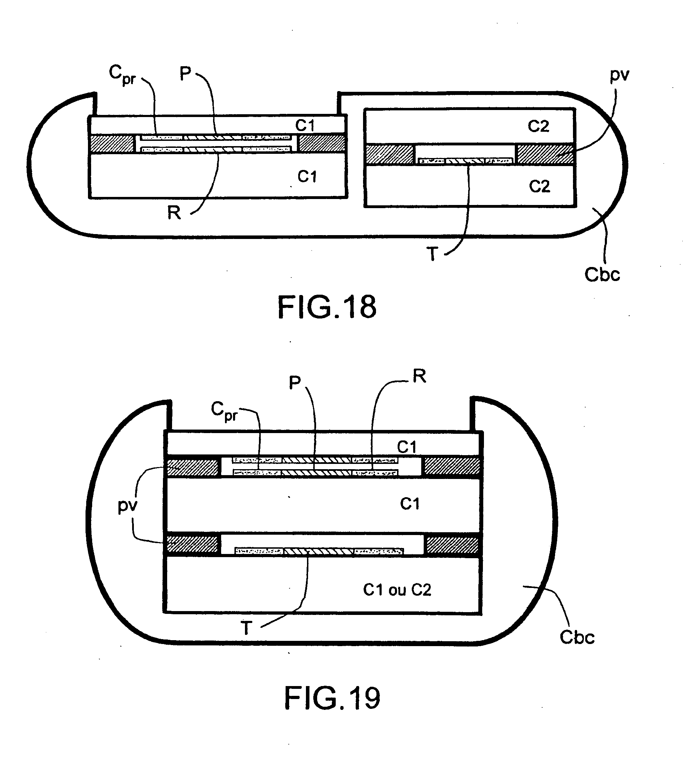

La figure 18 illustre à ce titre un exemple de capteur de pression avec antenne intégrée sur la puce SAW, présentant un avantage décisif car il permet d'accéder à de faibles encombrements tout en garantissant une isolation complète des connexions vis à vis du milieu extérieur.

Le capteur SAW est constitué d'un boîtier tout quartz enrobé à l'exception de sa face sensible à la pression par un matériau bio-compatible présentant une forme dénuée d'arrêtes vives.

Le boîtier tout quartz est composé de l'ensemble des résonateurs SAW. Celui ci peut être obtenu après découpe d'un ensemble de deux tranches qui ont été au préalable collées via un scellement verre de type pâte de verre pv présentant des propriétés de dilatation thermique aussi voisines que possibles du quartz, l'ensemble étant lié dans un conditionnement bio-compatible $C_{bc}$ (Xantar par exemple).

La première puce utilisée comme capot du boîtier tout quartz (coupe $C_1$) présente au minimum un résonateur SAW correspondant au résonateur P mais peut en accueillir deux dans le cas d'une structure différentielle. Le capot est aminci (à des épaisseurs pouvant aller jusqu'à 50 $\mu$m) à partir d'un wafer d'épaisseur standard (350$\mu$m par exemple) afin d'obtenir la sensibilité à la pression voulue dans une cavité $C_{pr}$ avec une pression de référence. L'antenne est constituée de métallisations directement déposées sur le substrat en quartz avec le même procédé de photolithographie que celui utilisé pour la fabrication des résonateurs. La seconde puce utilisée comme base du boîtier tout quartz (coupe $C_1$ également) présente un résonateur R. Ce résonateur est isolé mécaniquement des contraintes mécaniques liées à la pression extérieure en particulier grâce à l'utilisation d'un wafer non aminci. L'information de pression est obtenue par mesure différentielle entre les résonateurs P et R.

Le troisième résonateur T est réalisé sur un substrat séparé et abrité à l'intérieur d'une cavité tout quartz. Dans le cas d'un dispositif fonctionnant à 2.45 GHz, on peut utiliser une coupe de quartz $C_2$ différente de la coupe $C_1$ afin d'obtenir une sensibilité de la fréquence différente en fonction de la température. Pour un dispositif fonctionnant à une fréquence inférieure à 1 GHz le troisième résonateur peut utiliser la même coupe de quartz $C_1$ et la sensibilité différente en température est obtenue en faisant varier l'axe de propagation du résonateur T par rapport aux résonateurs R et P. L'information de température quant à elle est obtenue par mesure différentielle entre les résonateurs T et R.

Les configurations ci-dessus sont données à titre d'exemple et il est à noter de manière générale qu'actuellement il peut être avantageux de réaliser des dispositifs à 2,45 GHz avec des ondes de cisaillement transverses connues sous le nom de STW compte tenu de leur vitesse de propagation élevée, permettant un gain en fréquence de résonance de 60% par rapport au maximum accessible avec les ondes de Rayleigh pour une technologie donnée. Dans ce cas, sans que cela soit restrictif à cette situation particulière, on obtient un différentiel de sensibilité en température (entre les résonateurs R et P d'un côté et T de l'autre) en changeant la coupe de matériau du résonateur T. Celui-ci est alors organiquement séparé des autres résonateurs puisque réalisé sur un substrat différent. Dans le cas ou la technologie le permet, l'utilisation des ondes de Rayleigh pour une telle application permet indifféremment d'exploiter une telle approche ou celle décrite précédemment consistant à intégrer les trois éléments résonants sur un même substrat.

Ainsi et selon l'invention, la configuration du capteur avec antenne intégrée couplée à chacun des résonateurs présente un certain nombre d'avantages :

- dans le cas de cette configuration, chaque résonateur est connecté à sa propre antenne contrairement aux configurations existantes où les deux résonateurs sont connectés en parallèle sur l'antenne. Il s'ensuit une augmentation du coefficient de couplage (défini comme le rapport de la capacité électroacoustique à la capacité statique des résonateurs) ;
- la technologie de photolithographie utilisée pour la réalisation des antennes étant la même que celle utilisée pour la réalisation du SAW, on peut réaliser des repliements avec un grand nombre de degrés de liberté permettant d'accéder à des optimisations de taille importantes. Le procédé de fabrication du capteur (résonateur plus antenne) s'en trouve naturellement simplifié ;
- la technologie permet de s'affranchir de problèmes potentiels liés au milieu corrosif extérieur (milieu biologique par exemple) du fait qu'il n'est pas nécessaire de réaliser des contacts à l'extérieur du capteur pour le report d'antenne.

La figure 19 présente une variante du capteur de pression et de température. Le capteur est composé de trois dispositifs SAW reliés entre eux par un procédé de scellement des tranches de quartz. Le premier dispositif SAW comportant le résonateur à la pression P est aminci. L'empilement vertical des différents résonateurs permet d'accéder à un encombrement minimum. Chaque résonateur est muni d'une antenne individuelle selon les principes précédemment décrits. L'empilement est réalisé entre les trois substrats grâce à des cales périphériques en pâte de verre pv.

La montée en fréquence conduit naturellement à cette diminution de taille. Le capteur objet de la présente invention utilise une fréquence de fonctionnement de 2.45 GHz. Outre la réduction naturelle de la taille des antennes à l'échelle de la longueur d'onde, travailler à 2.45 GHz permet de bénéficier d'une bande ISM relativement six fois plus importante qu'à 433 MHz par exemple. La forte permittivité diélectrique des milieux biologiques (de l'ordre de 53 pour le muscle à 2.45 GHz) permet de réduire encore plus la longueur d'onde et par conséquent les dimensions des antennes. Les dimensions d'antennes ainsi obtenues (de l'ordre de quelques centimètres) permettent de pouvoir intégrer celles-ci directement sur le substrat en quartz. Les techniques originales de miniaturisation appliquées permettent alors de réduire ces dimensions jusqu'à un encombrement total de quelques millimètres. Leur fabrication est alors réalisée en même temps que le résonateur SAW ce qui permet en particulier de simplifier notablement le procédé de fabrication du capteur.

## Revendications

1. Capteur passif interrogeable à distance comprenant une antenne et au moins un résonateur à ondes de surfaces (R, P, T) comportant un transducteur à électrodes interdigitées avec deux ports ($p_1$, $p_2$) à la surface d'un substrat piézoélectrique (S), l'antenne étant constituée par un dipôle constitué de deux brins conducteurs ($B_1$, $B_2$) connectés aux deux ports du transducteur et intégrés sur ledit substrat piézoélectrique, **caractérisé en ce que** le capteur passif comporte en outre un élément conducteur de court-circuit ou de réglage ($A_c$) reliant les deux brins conducteurs en deux points de connexion ($b_1$, $b_2$) appartenant auxdits brins.

2. Capteur passif selon la revendication 1, **caractérisé en ce que** la longueur des brins conducteurs est de l'ordre de $\lambda_g/4 = \lambda_o/4\sqrt{\varepsilon_r}$, $\lambda_o$ étant la longueur d'onde associée à la fréquence de résonance du résonateur dans le vide et $\varepsilon_r$ étant en première approximation la permittivité diélectrique moyenne ambiante.

3. Capteur passif selon l'une des revendications 1 ou 2, **caractérisé en ce que** les brins conducteurs comportent un repliement des brins afin de diminuer la longueur totale de la structure.

4. Capteur passif à ondes acoustiques de surface selon la revendication 3, **caractérisé en ce que** le repliement est de type méandre ou serpentin.

5. Capteur passif à ondes acoustiques de surface selon l'une des revendications 1 à 4, **caractérisé en ce que** le transducteur présente un axe de propagation des ondes acoustiques de surface (XX') et un axe perpendiculaire (YY') audit axe de propagation, ledit axe de propagation séparant le plan du substrat en deux premiers demi-plans ($P_{1XX'}$, $P_{2XX'}$), l'axe perpendiculaire séparant le plan du substrat en deux seconds demi-plans ($P_{1YY'}$, $P_{2YY'}$).

6. Capteur passif selon la revendication 5, **caractérisé en ce que** lesdits points de connexion sont situés dans le même premier demi-plan.

7. Capteur passif à ondes acoustiques de surface selon l'une des revendications 5 ou 6, **caractérisé en ce que** l'élément conducteur de court-circuit est un pont conducteur, les points de connexion étant situés dans des premiers demi-plan différents.

8. Capteur passif à ondes acoustiques de surface selon l'une des revendications 5 ou 6, **caractérisé en ce**

**que** les points de connexion sont situés dans un même second demi-plan.

**9.** Capteur passif à ondes acoustiques de surface selon la revendication 5, **caractérisé en ce que** les points de connexion sont situés dans des seconds demi-plans différents.

**10.** Capteur passif selon l'une des revendications 1 à 9, **caractérisé en ce que** l'élément conducteur de court-circuit présente une largeur inférieure ou égale à celle des brins conducteurs.

**11.** Capteur passif selon l'une des revendications 4 à 8, **caractérisé en ce que** l'élément conducteur de court-circuit présente une largeur supérieure à celle des brins conducteurs.

**12.** Capteur passif selon l'une des revendications 1 à 11, **caractérisé en ce qu'**il est un capteur de pression comportant au moins deux résonateurs, chaque résonateur étant couplé à une antenne intégrée.

**13.** Capteur passif selon l'une des revendications 1 à 12, **caractérisé en ce qu'**il est un capteur de pression et de température, comportant un premier résonateur de référence, un second résonateur pour mesurer la température et un troisième résonateur sensible à la pression, chaque résonateur étant couplé à une antenne intégrée.

**14.** Capteur passif selon l'une des revendications 1 à 15, **caractérisé en ce qu'**il est un capteur de pression et/ou de température, comportant un empilement de plusieurs substrats comportant chacun un résonateur et une antenne intégrée, réalisé par l'intermédiaire de cales périphériques.

**15.** Capteur passif selon la revendication 14, **caractérisé en ce que** les cales périphériques sont de type pâte de verre (pv).

**16.** Capteur passif selon l'une des revendications 14 ou 15, **caractérisé en ce que** le résonateur sensible à la pression est en position supérieure dans l'empilement et en position tête-bêche par rapport au résonateur de référence.

**17.** Utilisation du capteur passif selon l'une des revendications 1 à 16 pour analyser des tissus de type peau, poumons, muscles, os.

**18.** Utilisation du capteur passif selon l'une des revendications 1 à 16 pour mesurer une pression artérielle.

**Claims**

**1.** A remotely interrogatable passive sensor comprising an antenna and at least one surface wave resonator (R, P, T) comprising an interdigitated electrodes transducer with two ports ($p_1$, $p_2$) on the surface of a piezoelectric substrate (S), the antenna being constituted by a dipole made up by two conducting strands ($B_1$, $B_2$) which are connected to two ports of the transducer and which are integrated on said piezoelectric substrate, **characterised in that** the passive sensor further comprises a short circuit or adjustment conducting element ($A_c$) connecting the two conducting strands at two connection points ($b_1$, $b_2$) belonging to said strands.

**2.** The passive sensor according to claim 1, **characterised in that** the length of the conducting strands is of the order of $\lambda_g/4 = \lambda_o/4\nu\varepsilon_r$, $\lambda_o$ being the wavelength associated with the resonance frequency of the resonator in the vacuum and $\varepsilon_r$ being a first approximation of the mean ambient dielectric permittivity.

**3.** The passive sensor according to claim 1 or 2, **characterised in that** the conducting strands are folded so as to reduce the total length of the structure.

**4.** A passive surface acoustic wave sensor according to claim 3, **characterised in that** the fold is of the meander or coil type.

**5.** The passive surface acoustic wave sensor according to any one of claims 1 to 4, **characterised in that** the transducer has a propagation axis of the surface acoustic waves (XX') and an axis perpendicular (YY') to said propagation axis, said propagation axis separating the plane of the substrate into two first semi-planes ($P_{1xx'}$, $P_{2xx'}$), the perpendicular axis separating the plane of the substrate into two second semi-planes ($P_{1YY'}$, $P_{2YY'}$).

**6.** The passive sensor according to claim 5, **characterised in that** said connection points are located in the first semi-plane.

**7.** The passive surface acoustic wave sensor according to claim 5 or 6, **characterised in that** the short-circuit conducting element is a conducting bridge, the connection points being located in different first semi-planes.

**8.** The passive acoustic surface wave sensor according to claim 5 or 6, **characterised in that** the connection points are located in a second semi-plane.

**9.** The passive acoustic surface wave sensor according to claim 5, **characterised in that** the connection points are located in different second semi-planes.

10. The passive sensor according to any one of claims 1 to 9, **characterised in that** the short-circuit conducting element has a width that is less than or equal to the width of the conducting strands.

11. The passive sensor according to any one of claims 4 to 8, **characterised in that** the short-circuit conducting element has a width that is greater than the width of the conducting strands.

12. The passive sensor according to claims 1 to 11, **characterised in that** it is a pressure sensor comprising at least two resonators, each resonator being coupled to an integrated antenna.

13. The passive sensor according to any one of claims 1 to 12, **characterised in that** it is a pressure and temperature sensor, comprising a first reference resonator, a second resonator for measuring the temperature and a third pressure sensitive resonator, each resonator being coupled to an integrated antenna.

14. The passive sensor according to any one of claims 1 to 13, **characterised in that** it is a pressure and/or temperature sensor, comprising a stack of several substrates each comprising a resonator and an integrated antenna, produced by means of peripheral shims.

15. The passive sensor according to claim 14, **characterised in that** the peripheral shims are of the glass paste (pv) type.

16. The passive sensor according to claim 14 or 15, **characterised in that** the pressure sensitive resonator is in an upper position in the stack and in a front-to-end relationship relative to the reference resonator.

17. The use of a passive sensor according to any one of claims 1 to 16 for analysing skin, lung, muscle or bone type tissues.

18. The use of a passive sensor according to any one of claims 1 to 16 for measuring an arterial pressure.

**Patentansprüche**

1. Fernabfragbarer passiver Sensor, der eine Antenne und wenigstens einen Oberflächenwellenresonator (R, P, T) umfasst, der einen Wandler mit ineinandergreifenden Elektroden mit zwei Ports ($p_1$, $p_2$) auf der Oberfläche eines piezoelektrischen Substrats (S) umfasst, wobei die Antenne von einem Dipol gebildet wird, der von zwei leitenden Strängen ($B_1$, $B_2$) gebildet wird, die mit zwei Ports des Wandlers verbunden und auf dem piezoelektrischen Substrat integriert sind, **dadurch gekennzeichnet, dass** der passive Sensor ferner ein leitendes Kurzschluss- oder Justierelement ($A_c$) umfasst, das die beiden leitenden Stränge an zwei zu den Strängen gehörenden Verbindungspunkten ($b_1$, $b_2$) verbindet.

2. Passiver Sensor nach Anspruch 1, **dadurch gekennzeichnet, dass** die Länge der leitenden Stränge in der Größenordnung von $\lambda_g/4=\lambda_o/4\nu\varepsilon_r$ liegt, wobei $\lambda_o$ die Wellenlänge ist, die mit der Resonanzfrequenz des Resonators im Vakuum assoziiert ist, und $\varepsilon_r$ in erster Annäherung die mittlere dielektrische Umgebungspermittivität ist.

3. Passiver Sensor nach Anspruch 1 oder 2, **dadurch gekennzeichnet, dass** die leitenden Stränge gefaltet sind, um die Gesamtlänge der Kontruktion zu reduzieren.

4. Passiver akustischer Oberflächenwellensensor nach Anspruch 3, **dadurch gekennzeichnet, dass** die Faltung vom Mäander- oder Spiraltyp ist.

5. Passiver akustischer Oberflächenwellensensor nach einem der Ansprüche 1 bis 4, **dadurch gekennzeichnet, dass** der Wandler eine Ausbreitungsachse der akustischen Oberflächenwelle (XX') und eine Achse lotrecht (YY') zu der Ausbreitungsachse hat, wobei die Ausbreitungsachse die Ebene des Substrats in zwei erste Halbebenen ($P_{1xx'}$, $P_{2xx'}$) trennt, wobei die lotrechte Achse die Ebene des Substrats in zwei Halbebenen ($P1_{YY'}$, $P_{2YY'}$) trennt.

6. Passiver Sensor nach Anspruch 5, **dadurch gekennzeichnet, dass** sich die Verbindungspunkte in derselben ersten Halbebene befinden.

7. Passiver akustischer Oberflächenwellensensor nach Anspruch 5 oder 6, **dadurch gekennzeichnet, dass** das leitende Kurzschlusselement eine leitende Brücke ist, wobei sich die Verbindungspunkte in unterschiedlichen ersten Halbebenen befinden.

8. Passiver akustischer Oberflächenwellensensor nach Anspruch 5 oder 6, **dadurch gekennzeichnet, dass** sich die Verbindungspunkte in derselben zweiten Halbebene befinden.

9. Passiver akustischer Oberflächenwellensensor nach Anspruch 5, **dadurch gekennzeichnet, dass** sich die Verbindungspunkte in unterschiedlichen zweiten Halbebenen befinden.

10. Passiver Sensor nach einem der Ansprüche 1 bis 9, **dadurch gekennzeichnet, dass** das leitende Kurzschlusselement eine Breite hat, die gleich oder geringer als die Breite der leitenden Stränge ist.

**11.** Passiver Sensor nach einem der Ansprüche 4 bis 8, **dadurch gekennzeichnet, dass** das leitende Kurzschlusselement eine Breite hat, die größer ist als die Breite der leitenden Stränge.

**12.** Passiver Sensor nach den Ansprüchen 1 bis 11, **dadurch gekennzeichnet, dass** es sich um einen Drucksensor handelt, der wenigstens zwei Resonatoren umfasst, wobei jeder Resonator mit einer integrierten Antenne gekoppelt ist.

**13.** Passiver Sensor nach einem der Ansprüche 1 bis 12, **dadurch gekennzeichnet, dass** es sich um einen Druck- und/oder Temperatursensor handelt, der einen ersten Referenzresonator, einen zweiten Resonator zum Messen der Temperatur und einen dritten druckempfindlichen Resonator umfasst, wobei jeder Resonator mit einer integrierten Antenne gekoppelt ist.

**14.** Passiver Sensor nach einem der Ansprüche 1 to 13, **dadurch gekennzeichnet, dass** es sich um einen Druck- und/oder Temperatursensor handelt, der einen Stapel von mehreren Substraten umfasst, die jeweils einen Resonator und eine integrierte Antenne umfassen, die mittels peripherer Füllstücke erzeugt werden.

**15.** Passiver Sensor nach Anspruch 14, **dadurch gekennzeichnet, dass** die peripheren Füllstücke vom Glaspastentyp (pv) sind.

**16.** Passiver Sensor nach Anspruch 14 oder 15, **dadurch gekennzeichnet, dass** der druckempfindliche Resonator in einer oberen Position in dem Stapel und in einer Spitzean-Ende-Beziehung relativ zum Referenzresonator ist.

**17.** Verwendung eines passiven Sensors nach einem der Ansprüche 1 bis 16 zum Analysieren von Haut-, Lungen-, Muskel- oder Knochengewebe.

**18.** Verwendung eines passiven Sensors nach einem der Ansprüche 1 bis 16 zum Messen eines arteriellen Drucks.

$A_1$ $A_2$

$S_{E/R}$

SAW

**FIG.1**

$p_1$

$M_1$ $M_2$

T

$p_2$

**FIG.2**

R

T

P

X

**FIG.3**

FIG.4

FIG.5

EP 2 232 218 B1

FIG.6

FIG.7

FIG.8

FIG.9

FIG.10

FIG.11

**FIG.12**

**FIG.13**

FIG.14

FIG.15

## FIG.16

## FIG.17

FIG.18

FIG.19

**RÉFÉRENCES CITÉES DANS LA DESCRIPTION**

**Documents brevets cités dans la description**

- WO 0072255 A1
- US 20060049714 A1